# EUROPÄISCHE PATENTSCHRIFT

(11) **EP 0 439 675 B1**
(45) Veröffentlichungstag und Bekanntmachung des Hinweises auf die Patenterteilung: **24.05.1995**
(21) Anmeldenummer: 90117511.7
(22) Anmeldetag: 11.09.1990
(51) Int. Cl.: H04N 7/30

(54) **Verfahren zur Aufbereitung von Bilddaten, insbesondere für Standbildübertragungszwecke**
Method for the processing of picture data, especially for still picture transmission
Procédé de traitement de données d'image, spécialement pour la transmission d'images fixes

(30) Priorität: 01.02.1990 DE 4002912
(43) Veröffentlichungstag der Anmeldung: 07.08.1991
(73) Patentinhaber: ANT Nachrichtentechnik GmbH, D-71522 Backnang (DE)
(72) Erfinder: Hildenbrand, Klaus, Dipl.-Ing., D-7069 Berglen (DE); Mayer, Jörg, Dipl.-Ing., D-7000 Stuttgart 50 (DE); Grotz, Karlheinz, Dipl.-Ing., D-7012 Fellbach (DE)

(56) Entgegenhaltungen:
- EP-A- 0 290 085
- EP-A- 0 336 510
- EP-A- 0 346 635
- GB-A- 2 207 829
- SYMPOSIUM RECORD BROADCAST SESSIONS, Montreux, 17. - 22. Juni 1989, Seiten 387-409; K. GROTZ et al.: "Image coding techniques for 64 Kbit/s channels"
- IEEE GLOBAL TELECOMMUNICATIONS CONFERENCE & EXHIBITION, Hollywood,Florida, 28. November - 1. Dezember 1988, Band 2, Seiten 1028-1032; A. LEGER etal.: "Still picture compression algorithms evaluated for international standardisation"
- NTZ - NACHRICHTENTECHNISCHE ZEITSCHRIFT, Band 42, Nr. 3, März 1989, Seiten 136-145, Berlin, DE; D. BIERE et al.: "Video-Codec und Endgeräte für das ISDN-Bildtelefon"
- IEEE GLOBAL TELECOMMUNICATIONS CONFERENCE & EXHIBITION, Hollywood,Florida, 28. November - 1. Dezember 1988, Seiten 997-1004; R. PLOMPEN et al.: "Motion video coding in CCITT SG XV - The video source coding"
- CCITT SGXV, 12. September 1986, Working Party XV/1, Dokument #141, Seiten 2-15,Specialists Group on Coding for Visual Telephony; "Specifications for referencemodel version 2 RM2"

## Beschreibung

Die Erfindung betrifft ein Verfahren zur Aufbereitung von Bilddaten, insbesondere für Standbildübertragungszwecke. Die Bilddaten werden, um möglichst geringe Übertragungsbitraten zu erhalten, in Teilbildbereiche (Datenblöcke) zerlegt, die einer Transformationscodierung, z.B. einer DCT (Discrete Cosine Transform) zur Gewinnung von Koeffizienten unterzogen werden und anschließend quantisiert werden (EP 244 001 A2, EP 336 510 A2).

Zur Übertragung von Standbildern in CCIR-Qualität ist ein Normvorschlag veröffentlicht - JPEG (Joint Photographic Experts Group) ISO/IEC JTC1/SC2/W8, CCITT SGVIII, August 31, 1989. Dort werden zwei prinzipielle Verfahren genannt:
a) Sequential Reference Modell
   - Aufteilung des Bildes in Blöcke der Größe 8x8 Pixel,
   - DCT-Transformation und Quantisierung
   - Übertragung in p x 64 kBit/s Kanälen

   Die Übertragung erfolgt Block für Block mit der vollen Auflösung. Vorteilhaft für Systeme, die keinen Speicher für den vollständigen Koeffizientensatz des Gesamtbildes benötigen. Der Bildaufbau erfolgt entsprechend der Bearbeitungsrichtung von links oben nach rechts unten; die bearbeiteten Blöcke werden sofort übertragen.
   Nachteile:
   - Feste Auflösung, wird vor der Übertragung festgelegt;
   - keine schnelle Darstellung mit geringerer Auflösung für den ersten Überblick
b) Progressive Reference Modell
   - Aufteilung des Bildes in Blöcke der Größe 8x8 Pixel,
   - DCT-Transformation
   - Zwischenspeicherung der Koeffizienten des Bildes
   - Quantisierung
   - Übertragung in p x 64 kbit/s Kanälen in mehreren Stufen mit wachsender Bildauflösung mittels verschiedener Verfahren

Die Zwischenspeicherung der Koeffizienten macht einen zusätzlichen Speicher erforderlich, der die 1,5-fache Größe des entsprechenden Bildspeichers für die Abspeicherung eines Quellbildes haben muß.

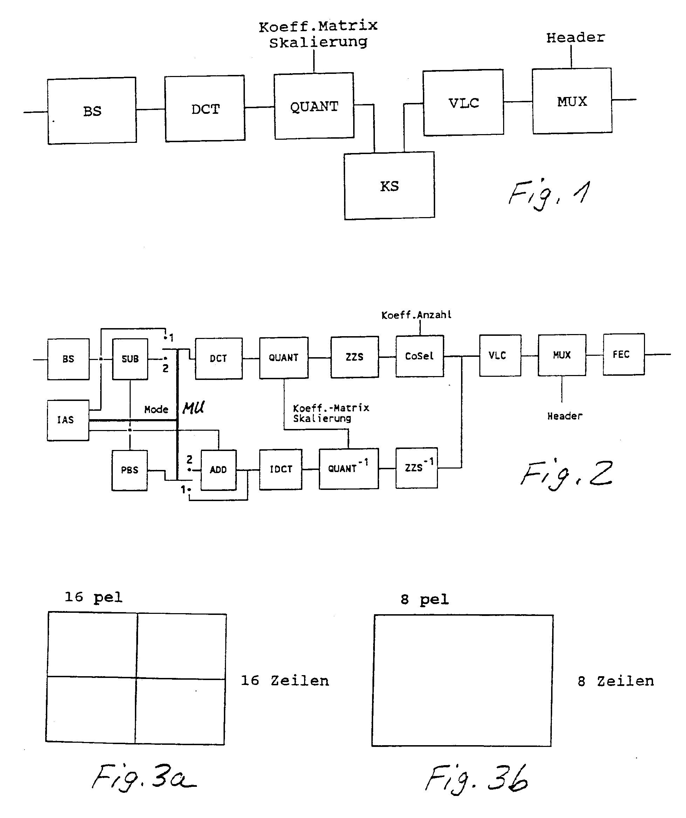

Fig. 1 zeigt ein Blockschaltbild für das Progressive Reference Modell. Darin bedeuten: BS = Bildspeicher für das jeweils zu verarbeitende Quellbild, DCT = Diskrete Cosinustransformation, QUANT = Quantisierung der Koeffizienten, KS = Koeffizientenspeicher, VLC = Lauflängenkodierer, MUX = Multiplexer für die Bilddatenübertragung. Für das Progressive Reference Modell werden im ISO Normenvorschlag drei Verfahren zum progressiven Bildaufbau vorgestellt:
1. Sukzessive Approximation
   Quantisierung der Koeffizienten in zunächst grober Stufe und Übertragung. Bleibende Fehler werden in weiteren Stufen mit feiner werdender Quantisierung übertragen. Damit wird in kürzerer Zeit ein grobes Bild übertragen und mit wachsender Dauer verfeinert.
2. Spektrale Koeffizientenauswahl
   Die Quantisierung wird sofort auf den Endwert vorgenommen und die quantisierten Koeffizienten zwischengespeichert. Die Übertragung erfolgt wieder in mehreren Stufen und beschränkt sich zunächst auf die niederfrequenten Spektralanteile (Koeffizientenselektion). In weiteren Schritten werden die höherfrequenten Anteile übertragen, bis die volle Bildauflösung vorhanden ist.
3. Hierarchische Bildcodierung
   Auflösungsreduktion des Bildes durch Tiefpassfiltern und Abtastratenwandlung um Faktor 2 oder 4 in beiden Richtungen im Ortsbereich. Die Pixelanzahl (damit auch die Koeffizientenanzahl) reduziert sich entsprechend um die Faktoren 4 bzw. 16. Die so reduzierten Bilder werden codiert und übertragen, sie dienen gleichzeitig als Prädiktion für den nächsten Schritt, der dann mit der nächsthöheren Auflösung ausgeführt wird. Durch die Reduktion der Pixelanzahl erfolgt die Übertragung eines zunächst unschärferen Bildes um den Reduktionsfaktor schneller.

Bei dem Standbildcodierer gemäß EP-A-336 510 wird das Progressive Reference Modell verwendet. Bei der erstmaligen Übertragung pro Viertelbild steuert eine Auswahlschaltung den Quantisierer so, daß er mit einer Quantisierungskennlinie arbeitet, die der gröbsten zur Verfügung stehenden Quantisierung entspricht. Bei einer weiteren Übertragung wird eine Quantisierungskennlinie mit feinerer Quantisierung ausgewählt, wobei hierzu auf das rückgewandelte zuvor übertragene Bild zurückgegriffen wird.

Aufgabe der Erfindung ist es, ein Verfahren zur Aufbereitung von Bilddaten, insbesondere für eine Standbildübertragung aufzuzeigen, mit der eine kurze Übertragungszeit für Folgebilder, insbesondere für solche Folgebilder, die gegenüber einem ersten Quellbild wenig geändert sind, realisierbar ist. Diese Aufgabe wird durch die Schritte des Patentanspruchs 1 gelöst. Die Ansprüche 2 bis 8 betreffen vorteilhafte Weiterbildungen des Verfahrens.

Das Verfahren nach der Erfindung weist folgende Vorteile auf: Für die Standbildübertragung kann eine vorhandene Anordnung zur Verarbeitung von Bewegtbildern herangezogen werden. Für Bewegtbild- und Standbildübertragung sind keine zwei getrennte Codecs erforderlich. Durch die vertikale Abtastratenwandlung bezüglich des Chrominanzsignals ist die zu übertragende Datenrate ohne merklichen Qualitätsverlust reduziert, was zum schnelleren Folgebildaufbau nutzbar ist. Für wenig geänderte Folgebilder kann die Übertragungszeit sehr verkürzt oder die Auflösung weiter erhöht werden, da kein vollständiger Bildneuaufbau erforderlich ist. Codierbaugruppen, die für die Bewegtbildübertragung konzipiert sind, müssen zur Standbildübertragung lediglich mit einer erweiterten Ablaufsteuerung nachgerüstet werden.

Anhand der Zeichnungen wird ein Ausführungsbeispiel der Erfindung nun näher erläutert. Es zeigen
- Fig. 2: ein Blockschaltbild eines Bewegtbild- und Standbildcodierers nach der Erfindung,
- Fig. 3a,b: Luminanz- und Chrominanz-Blöcke eines Makroblocks,
- Fig. 4: die Makroblockanordnung innerhalb eines "Group-of-Blocks",
- Fig. 5: die Anordnung der Bildübertragungsfolge der "Group-of-Blocks" in einem CIF-Bild,
- Fig. 6: die Anordnung und Übertragungsfolge der "Group-of-Blocks" bei der Standbildcodierung.

Eine beispielsweise von einer Kamera gelieferte Bildsequenz wird vor der Einschreibung in einen Bildspeicher BS (Fig. 2) bezüglich ihres Bildformats gewandelt. Digitalisierte Luminanzbildpunkte werden von einem Format 720 pel x 576 Zeilen auf die Größe 704 x 576 durch Weglassen von jeweils 8 Randpunkten gebracht. Das Chrominanzbild wird vom Format 360 x 576 auf das Format 352 x 288 gebracht. Horizontal werden also jeweils 4 Randpunkte unterdrückt. In vertikaler Bildrichtung wird beim Chrominanzbild eine Abtastratenwandlung mit dem Faktor 1/2 vorgenommen. Das Bildformat entspricht für Luminanz und Chrominanz dann der vierfachen CIF (Common Interchange Format)-Bildgröße, die beispielsweise der CCITT Draft Revision of Recommendation H. 261 TD4 zu entnehmen ist. Die Bildbearbeitung kann teilbildbereichsweise beispielsweise gemäß CCITT H. 261, s.o., makroblockweise mit einer Makroblockgröße von 16x16 Bildpunkten bei Luminanz (enthält 4 Luminanzblöcke mit 8x8 pel) und jeweils 8x8 pel bei den Chrominanzkomponenten U und V vorgenommen werden; dies entspricht wegen der unterschiedlichen Auflösung derselben Bildschirmfläche. Je Makroblock sind also 6 Blöcke der Größe 8x8 pel zu bearbeiten.

Der Modeumschalter MU steht zu Beginn einer neuen Bildübertragung in Stellung 1, so daß die Bilddaten als PCM-Werte vom Bildspeicher BS zur Transformations-Codierstufe DCT kommen. Die Stellung 1 wird als INTRA-MOde bezeichnet (CCITT H. 261, TD 5). Um einen schnellen Bildaufbau zu erhalten, erfolgt die Aufbereitung von Bilddaten für die Übertragung in mehreren Durchläufen, hier speziell in drei Durchläufen. Zuerst erfolgt die Quantisierung QUANT der durch die Transformationscodierung entstandenen Koeffizienten mit einem sehr groben Quantisierungsfaktor. Es wird, wie im ISO-Normvorschlag angegeben, ein wahrnehmungsadaptiver Quantisierer mit Skalierungsmöglichkeit eingesetzt. Der vorgewählte Koeffizientensatz wird in diesem ersten Durchlauf mit dem Faktor 4 skaliert. Diese Skalierung mit dem Faktor 4 wird jedoch nur auf die AC-Koeffizienten (hochfrequente Koeffizienten gemäß ISO Normvorschlag) angewendet. Der DC-Koeffizient (Gleichanteil) wird abweichend vom ISO Normvorschlag mit einer festen und endgültigen Feinquantisierung - beispielsweise Quantisierungswert 8 - quantisiert und mit einer festen Codewortlänge von 8 Bit übertragen. Diese Vorgehensweise beruht auf der Erkenntnis, daß die DC-Werte Absolutwerte sind, für die eine statistische Codierung nicht sinnvoll ist. Die AC-Koeffizienten werden entsprechend ihrer spektralen Bedeutung in eine lineare Anordnung gebracht, beispielsweise durch das im ISO Normvorschlag dargestellte "Zig-Zag-Scan"-Verfahren - Baugruppe ZZS. Die nächste Baugruppe Co Sel, die für die Bewegtbildcodierung zum Bildaufbau benötigt wird, selektiert den DC-Koeffizienten sowie eine Anzahl signifikanter AC-Koeffizienten - für den ersten Bearbeitungsdurchlauf 5 AC - Koeffizienten. Diese ausgewählten grob quantisierten AC-Koeffizienten werden in der Baugruppe VLC lauflängencodiert und mittels eines Multiplexers MUX in einen Multiplexrahmen eingelagert, der diverse Steuerinformationen - Header - enthält. Im Anschluß an eine Vorwärts-Fehlerkorrekturstufe FEC werden die aufbereiteten Bilddaten entweder zwischengespeichert oder zu einem empfangsseitigen Decoder über einen p x 64 kbit/s Datenkanal übertragen, der die senderseitigen Datenaufbereitungsschritte für eine Bilddarstellung auf einem Bildschirm wieder rückgängig macht.

Die eindimensionale Anordnung der 6 Koeffizienten durch die Baugruppe ZZS wird wieder rückgängig gemacht - Baugruppe ZZS⁻¹ - und die quantisierten Werte auf den Repräsentationspegel zurückgerechnet - Stufe QUANT⁻¹. Mit einer Stufe zur inversen Cosinustransformations IDCT wird der aufbereitete Makroblock in den Bildbereich zurückgewandelt und über den Modeumschalter MU in Stellung 1 in den Prädiktionsspeicher PBS eingeschrieben. Dasselbe Prädiktionsbild wird im empfangsseitigen Decoder ebenfalls ermittelt und auf dem Bildschirm dargestellt. Nach der Abarbeitung des ersten Bearbeitungsdurchgangs ist im Decoder und im Prädiktionsspeicher PBS ein Bild mit grober Auflösung vorhanden.

Dasselbe Quellbild wird ein einem zweiten Durchgang wieder makroblockweise aus dem Bildspeicher BS ausgelesen, jetzt aber steht der Modeumschalter MU in Stellung 2 - INTER-Mode. Somit wird das im ersten Bearbeitungsdurchgang ermittelte und übertragene Bild aus dem Prädiktionsspeicher PBS ausgelesen und vom Original-Quellbild mittels des Subtrahierers SUB subtrahiert. Das bei der Subtraktion entstehende Differenzbild wird mittels der Transformationsstufe DCT transformiert und mit dem feineren Skalierungsfaktor von 1 in der Stufe QUANT quantisiert. Nach dem Zig-Zag-Scan der Stufe ZZS werden jetzt noch vier weitere Koeffizienten mittels der Selektionsstufe CoSel selektiert, also insgesamt 10 Koeffizienten bei der Übertragung berücksichtigt, wobei die 5 AC-Koeffizienten beim ersten Durchgang verfeinert und die anderen vier erstmals übertragen werden. Der DC-Koeffizient ist bereits im ersten Durchgang in voller Auflösung übermittelt worden, so daß dieser keine weitere Veränderungen erfährt. Mit den Stufen ZZS⁻¹, QUANT⁻¹ und IDCT wird, wie im Decoder, das Differenzbild ermittelt und mittels des Addierers ADD in ein neues Prädiktionsbild zurückverwandelt und in den Prädiktionsbildspeicher PBS eingeschrieben.

Wenn ein Bild von noch besserer Bildqualität gewünscht wird, erfolgt ein dritter Durchgang, der bis auf die nachfolgend erläuterten Schritte mit den Schritten des zweiten Durchgangs übereinstimmt. Verändert wird jetzt nur noch die Skalierung des Quantisierers QUANT auf 0,5 und die Koeffizientenselektionsstufe CoSel läßt jetzt alle Koeffizienten für die Übertragung zu. Im Anschluß an die Rückwandlung ist bei diesem Durchgang im empfangsseitigen Decoder und im Prädiktionsbildspeicher PBS ein vollständiges Bild mit voller Auflösung vorhanden, wobei allerdings keine bitgenaue Abbildung des Quellbildes erfolgt ist. Eine bitgenaue Abbildung kann erfolgen, wenn sich weitere Durchgänge von der Art des letzten Durchgangs anschließen, wobei die Quantisierungsskalierung weiter verfeinert wird. Bei der Verwendung der Bewegtbildeinrichtung zur Standbildcodierung können die Codetabellen zur Entropiecodierung und die Multiplexerstruktur nach der CCITT Draft Revision of Recommendation H. 261 ohne Änderung verwendet werden. Zusätzlich sind nur die Baugruppen zur Koeffizientenselektion und zur Modeumschaltung. Außerdem muß der verwendete Quantisierer in der Lage sein, mit einer Koeffizientenmatrix zu arbeiten.

Nachdem mit den zuvor beschriebenen Schritten in zwei bzw. falls erforderlich in drei Durchgängen ein Bild übertragen oder zur Übertragung aufbereitet wurde, kann dieses Bild als Prädiktion für ein Folgebild (Quellfolgebild) herangezogen werden. Dies ist vor allem in Übervachungseinrichtungen (supervision mode) vorteilhaft anwendbar, wenn sich zum vorangegangenen Quellbild nur in einem Bildausschnitt Änderungen ergeben. Diese können in viel kürzerer Zeit übertragen und dargestellt werden als bei einem Bildneuaufbau. In einem ersten Schritt wird dazu für jeden Makroblock festgestellt, ob zwischen Quellbild und Quellfolgebild eine Änderung erfolgt ist, die nicht aufgrund des Kamerarauschens entstanden ist. Diese Entscheidung wird im Schaltungsblock IAS getroffen. Als Kriterien für eine solche Änderung können dies eine Varianzanalyse oder eine dem Kamerarauschen angepaßte Schwellwertentscheidung - Bild-zu-Bild-Differenz (Framedifferenz FD) > Schwelle - sein, vgl. beispielsweise US 4,771,331 oder Dissertation J. Klie "Codierung von Fernsehsignalen für niedrige Übertragungsbitraten", TU Hannover, 1978, Seiten 62 bis 69. Die Prüfung eines dieser Kriterien liefert die Aussage, ob INTER- oder INTRA-Mode gewählt werden muß.

### Fall 1: INTRA

Der Block wird wie beim ersten Quellbild vollständig neu übertragen. Diese Entscheidung fällt nur dann für alle Blöcke, wenn zwischen Quellbild und Quellfolgebild der Bildausschnitt verändert wurde. Sind nur lokale Änderungen vorhanden, so wird nur bei den betreffenden Blöcken auf INTRA-Mode umgeschaltet und diese dann vollständig neu aufgebaut.

### Fall 2: INTER

### Durchgang 1:

Im Falle eines unveränderten Blockes zwischen Quellbild und Quellfolgebild tritt als Differenz nur der Rauschbelag der Kamera auf, wobei die Schwelle zur INTRA-Entscheidung nicht überschritten wird. Dadurch wird der zu übertragende Makroblock durch den entsprechenden Makroblock vom Quellbild prädiziert. Damit tritt als Differenzsignal (abgesehen vom Rauschbelag) der Wert 0 auf, so daß dieser Block keine Datenrate (mit Ausnahme des Multiplexrahmens) erfordert.

Die Durchgänge 2 und 3 bei der Bearbeitung des Quellfolgebildes werden wie bei der Bearbeitung des Quellbildes im INTER-Mode übertragen, d.h. es erfolgt eine Prädiktion durch den entsprechenden Block des vorangegangenen Bildes. Durch die Prädiktion mit dem bereits vollständigen Quellbild treten bei diesen Durchgängen wieder nur in den geänderten Makroblöcken von Null verschiedene Differenzen auf, die entsprechend bearbeitet werden. Damit sinkt die Übertragungsdauer für das Quellfolgebild proportional zu der Zahl der als ungeändert erkannten Makroblöcke. Falls keine oder nur einzelne Makroblöcke als geändert erkannt werden, kann dies auch als Kriterium dienen, im Durchgang 3 den Skalierungsfaktor für die Quantisierung weiter zu verfeinern, um die Restdifferenz zum vorangegangenen Bild weiter zu verfeinern. Als weiteres Kriterium für diese Entscheidung kann auch die in den Durchgängen 1 und 2 benötigte Bitanzahl für die quantisierten und selektierten Koeffizienten (und damit Übertragungszeit) dienen, d.h. falls die ermittelte Bitanzahl kleiner als ein Schwellwert ist, wird für den Durchgang 3 eine feinere Quantisierung vorgenommen.

Die im ISO Normvorschlag enthaltene wahrnehmungsadaptive Quantisierungstabelle für die Quantisierung der Farbinformation ist unsymmetrisch. Dies resultiert daher, weil ein 8x8 pel Chrominanzblock aufgrund der doppelten Chrominanzzeilenzahl der CCIR-Bildes im Vergleich zu diesem Vorschlag eine rechteckige Fläche mit der Ausdehnung x:y = 2:1 besitzt, während mit dem bei der Erfindung vorgesehenen vierfach-CIF-Bild dieser Block quadratisch ist. Deshalb wird erfindungsgemäß eine symmetrische Quantisierungstabelle eingesetzt.

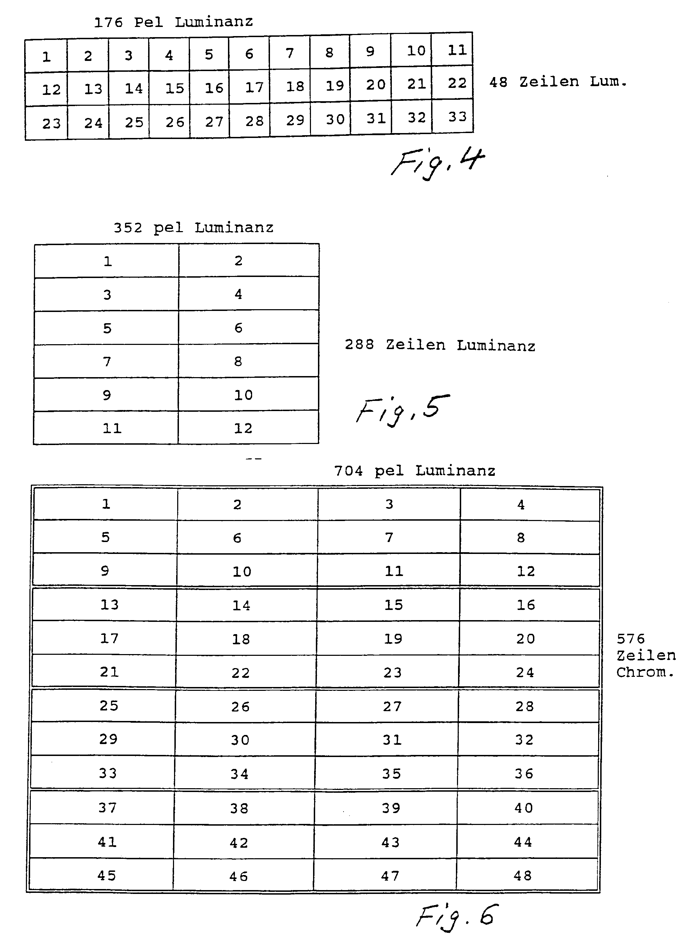

Die Anordnung der Blöcke eines Makroblockes bei der Erfindung zeigt Fig. 3a bezüglich der Luminanz und Fig. 3b bezüglich der Chrominanz. In der CCITT Empfehlung H. 261 sind die Makroblöcke MB zu "Group-of-Blocks" GOB zusammengefaßt, die im Multiplexrahmen bezüglicher ihrer Adressen gekennzeichnet sind (GOB Header). Die Anordnung der Makroblöcke innerhalb eines Group-of-Blocks bei der Erfindung zeigt Fig. 4. In Fig. 5 ist für eine CIF-Bildaufteilung die Anordnung und Übertragungsfolge der Group-of-Blocks GOBs dargestellt. Die Anordnung und Übertragungsfolge der GOBs bei der Standbildcodierung nach der Erfindung mit einem 4-fach CIF-Bildformat zeigt Fig. 6. Die GOB-Adressierung im GOB-Header (s. CCITT Empfehlung H. 261) kann allerdings nur 4 Bit aufnehmen, so daß die Übertragungsfolge in 4*12 GOBs aufgeteilt werden muß und im Picture-Header des Multiplexrahmens die 4 Teilbilder adressiert werden müssen. Durch die Kennzeichnung des Standbildmodes im Picture Header wird beim Verfahren nach der Erfindung die GOB-Anordnung im 4-fach-CIF-Bild gegenüber dem CIF-Bild umgeschaltet (Fig. 5 und 6).

## Patentansprüche

1. Verfahren zur Aufbereitung von Bilddaten für insbesondere Standbildübertragungszwecke, wobei für einen Bildneuaufbau
a) die Bilddaten eines Quellbildes zum Erhalt spektraler Koeffizienten teilbildbereichsweise transformationscodiert werden,
b) die erhaltenen Koeffizienten quantisiert werden und zwar
b1) bezüglich des DC-Koeffizienten mit einer endgültigen Feinquantisierung,
b2) bezüglich der AC-Koeffizienten mit einer Grobquantisierung,
c) der DC-Koeffizient sowie eine Anzahl signifikanter AC-Koeffizienten selektiert werden,
d) die so aufbereiteten Bilddaten gegebenenfalls unter Zwischenschaltung weiterer Codierungsschritte übertragen oder zwischengespeichert werden,
e) die in den Schritten a) bis c) gewonnenen Bilddaten bis auf den durch die Quantisierung und Selektierung verloren gegangenen Informationsgehalt rückgewandelt werden,
f) ein Differenzbild aus den Bilddaten des Quellbildes und den rückgewandelten Bilddaten ermittelt wird,
g) die Differenzbilddaten zum Erhalt spektraler Koeffizienten teilbildbereichsweise transformationscodiert werden,
h) die erhaltenen AC-Koeffizienten mit einer feineren Quantisierung als der in Schritt b2) vorgenommenen Grobquantisierung quantisiert werden,
i) der endgültig quantisierte DC-Koeffizient sowie eine Anzahl signifikanter AC-Koeffizienten, die größer ist als die im Schritt c) erfaßten AC-Koeffizienten, selektiert werden,
j) die aufbereiteten Differenzbilddaten gegebenenfalls unter Zwischenschaltung weiterer Codierschritte übertragen oder zwischengespeichert werden.

2. Verfahren nach Anspruch 1, dadurch gekennzeichnet, daß
k) die in den Schritten g) bis i) des Anspruchs 1 gewonnenen Bilddaten bis auf den durch die Quantisierung und Selektierung verloren gegangenen Informationsgehalt rückgewandelt werden,
l) ein Differenzbild aus den Bilddaten der nach den Schritten e) und k) rückgewandelten Bilddaten ermittelt wird,
m) letztere Differenzbilddaten zum Erhalt spektraler Koeffizienten teilbildbereichsweise transformationscodiert werden,
n) alle AC-Koeffizienten noch feiner quantisiert werden als bei allen bisherigen Schritten,
o) alle quantisierten Koeffizienten gegebenenfalls unter Zwischenschaltung weiterer Codierschritte übertragen oder zwischengespeichert werden.

3. Verfahren nach Anspruch 1 oder 2, dadurch gekennzeichnet, daß die unter Schritt e) oder k) rückgewandelten oder unter Rückwandlung der in den Schritten m) und n) ermittelten Bilddaten teilbildbereichsweise mit den Bilddaten eines Quellfolgebildes verglichen werden, und daß nur jene Teilbildbereiche aus dem Quellfolgebild neu aufgebaut werden, bei denen kein hoher Übereinstimmungsgrad festgestellt wird.

4. Verfahren nach Anspruch 3, dadurch gekennzeichnet, daß wenn keine oder nur wenige Teilbildbereiche durch rückgewandelte Bilddaten aus dem Quellbild ersetzbar sind, bei der Quantisierung nach Schritt n) der Skalierungsfaktor für die Quantisierung noch weiter verfeinert wird.

5. Verfahren nach Anspruch 3, dadurch gekennzeichnet, daß wenn für die Quellbild- und erste Differenzbildübertragung der quantisierten und selektierten Koeffizienten eine vorgegebene Bitanzahl nicht überschritten wird, bei der Quantisierung nach Schritt n) der Skalierungsfaktor für die Quantisierung noch weiter verfeinert wird.

6. Verfahren nach einem der Ansprüche 1 bis 5, dadurch gekennzeichnet, daß vor der Aufbereitung von Bilddaten für Standbildübertragung eine Bildformatwandlung in dem Sinne vorgenommen wird, daß vier genormte Bewegtbilder (CIF-Bilder) einem Standbild entsprechen.

7. Verfahren nach Anspruch 6, dadurch gekennzeichnet, daß die Bildformatwandlung darin besteht, daß bei dem Luminanzsignal von beispielsweise 720 x 576 Bildpunkten jeweils die 8 Randpunkte rechts und links in horizontaler Richtung unterdrückt werden und beim Chrominanzsignal eine vertikale Abtastratenwandlung mit dem Faktor 1/2 vorgenommen wird und rechts und links jeweils 4 Randpunkte unterdrückt werden.

8. Verfahren nach einem der Ansprüche 1 bis 7, dadurch gekennzeichnet, daß die Quantisierung des Chrominanzsignals mit einer symmetrischen Quantisierungstabelle vorgenommen wird.

## Claims

1. Method for the preparation of image data for, in particular, still image transmission purposes, wherein for the new build-up of an image
a) the image data of a source image are transformation-coded in partial image regions to obtain spectral co-efficients,
b) the obtained co-efficients are quantised and namely
b1) in respect of the DC co-efficient with a final fine quantising and
b2) in respect of the AC co-efficients with a coarse quantising,
c) the DC co-efficient as well as a number of significant AC co-efficients are selected,
d) the thus prepared image data are transmitted or stored intermediately, in a given case with the interposition of further coding steps,
e) the image data obtained in the steps (a) to (c) are transformed back except for the information content lost due to the quantisation and selection,
f) a difference image is obtained from the image data of the source image and from the image data that had been transformed back,
g) the difference image data are transformation-coded in partial image regions to obtain spectral co-efficients,
h) the obtained AC co-efficients are quantised with a finer quantisation than the coarse quantisation undertaken in step (b2),
i) the finally quantised DC co-efficient as well as a number of AC co-efficients, which is greater than that of the AC co-efficients picked up in step (c), are selected and
j) the prepared difference image data are transmitted or stored intermediately, in a given case with the interposition of further coding steps.

2. Method according to claim 1, characterised thereby, that
k) the image data obtained in the steps (g) to (i) of the claim 1 are transformed back except for the information content lost due to the quantisation and selection,
l) a difference image is obtained from the image data that had been transformed back according to the steps (e) and (k),
m) the latter difference image data are transformation-coded in partial image regions to obtain spectral co-efficients,
n) all AC co-efficients are quantised still more finely than in any of the previous steps and
o) all quantised co-efficients are transmitted or stored intermediately, in a given case with the interposition of further coding steps.

3. Method according to claim 1 or 2, characterised thereby, that the image data, that had been transformed back in step (e) or (k) or that had been obtained under reverse transformation of the image data obtained in the steps (m) and (n), are compared in partial image regions with the image data of a successive source image and only those partial image regions of the successive source image are built up anew, for which no high degree of agreement was ascertained.

4. Method according to claim 3, characterised thereby, that when no or only a few partial image regions are replaceable by transformed-back image data from the source image, the scaling factor for the quantisation is made still more fine for the quantisation according to step (n).

5. Method according to claim 3, characterised thereby, that when a preset bit number is not exceeded for the source image transmission and the first difference image transmission of the quantised and selected co-efficients, the scaling factor for the quantisation is made still more fine for the quantisation according to step (n).

6. Method according to one of the claims 1 to 5, characterised thereby, that before the preparation of image data for still image transmission, an image format conversion is undertaken in the sense that four standardised moving images (CIF images) correspond with one still image.

7. Method according to claim 6, characterised thereby, that the image format conversion consists in that in the luminance signal of for example 720 by 576 image dots, the 8 edge dots each at the right and the left in horizontal direction are suppressed, and that in the chrominance signal, a vertical scanning rate conversion by the factor 1/2 is undertaken and 4 edge dots each at the right and the left are suppressed.

8. Method according to one of the claims 1 to 7, characterised thereby, that the quantisation of the chrominance signal is undertaken with a symmetrical quantisation table.

## Revendications

1. Procédé pour traiter ou préparer des données d'image, en particulier à des fins de transmission d'images fixes, selon lequel, pour une nouvelle construction d'image
a) les données d'image d'une image source sont soumises, partie d'image par partie d'image, à un codage de transformation en vue de l'obtention de coefficients spectraux,
b) les coefficients obtenus sont quantifiés
b1) selon une quantification fine définitive pour ce qui concerne le coefficient DC ou coefficient continu,
b2) selon une quantification grossière pour ce qui concerne les coefficients AC ou coefficients haute fréquence,
c) le coefficient DC ainsi qu'un certain nombre de coefficients AC significatifs sont sélectionnés,
d) les données d'image, ainsi préparées, sont transmises ou mises en mémoire tampon, éventuellement avec interposition d'autres étapes de codage,
e) les données d'image obtenues dans les étapes a) à c), sont reconverties, exception faite de la teneur en information perdue par la quantification et la sélection,
f) une image différentielle est établie à partie des données d'image de l'image source et des données d'image reconverties,
g) les données d'image différentielle sont soumises, partie d'image par partie d'image, à un codage de transformation en vue de l'obtention de coefficients spectraux,
h) les coefficients AC obtenus sont quantifiés selon une quantification plus fine que la quantification grossière effectuée dans l'étape b2),
i) le coefficient DC, quantifié de façon définitive, ainsi qu'un certain nombre de coefficients AC significatifs, nombre qui est plus grand que celui des coefficients AC traités dans l'étape c), sont sélectionnés et
j) les données d'image différentielle préparées, sont transmises ou mises en mémoire tampon, éventuellement avec interposition d'autres étapes de codage.

2. Procédé selon la revendication 1, caractérisé en ce que
k) les données d'image, obtenues dans les étapes g) à i) de la revendication 1, sont reconverties, à l'exception de la teneur en information perdue par la quantification et la sélection,
l) une image différentielle est établie à partir des données d'image reconverties selon les étapes e) et k),
m) ces dernières données d'image différentielle sont soumises, partie d'image par partie d'image, à un codage de transformation en vue de l'obtention de coefficients spectraux,
n) tous les coefficients AC sont quantifiés encore plus finement que dans toutes les étapes effectuées jusqu'alors et
o) tous les coefficients quantifiés sont transmis ou mis en mémoire tampon, éventuellement avec interposition d'autres étapes de codage.

3. Procédé selon la revendication 1 ou 2, caractérisé en ce que les données d'image reconverties dans l'étape e) ou k), ou déterminées par reconversion des données d'image obtenues dans les étapes m) et n), sont comparées, partie d'image par partie d'image, avec les données d'une image consécutive à l'image source, et que seules sont reconstruites les parties de l'image consécutive pour lesquelles n'est pas constaté un haut degré de concordance.

4. Procédé selon la revendication 3, caractérisé en ce que, au cas où aucune partie d'image n'est remplaçable, ou seulement quelques parties d'image sont remplaçables par des données d'image reconverties de l'image source, le facteur d'échelle pour la quantification est affiné plus encore lors de la quantification selon l'étape n).

5. Procédé selon la revendication 3, caractérisé en ce que, au cas où un nombre préfixé de bits n'est pas dépassé pour la transmission d'image source et de première image différentielle des coefficients quantifiés et sélectionnés, le facteur d'échelle pour la quantification est affiné plus encore lors de la quantification selon l'étape n).

6. Procédé selon une des revendications 1 à 5, caractérisé en ce que, avant la préparation de données d'image à des fins de transmission d'images fixes, une conversion du format d'image est opérée en ce sens que quatre images animées normalisées (images CIF) correspondant à une image fixe.

7. Procédé selon la revendication 6, caractérisé en ce que la conversion du format d'image consiste à supprimer, pour le signal de luminance, parmi les 720 x 576 points d'image par exemple, les 8 points se trouvant sur chacun des bords droit et gauche en direction horizontale et, pour le signal de chrominance, à opérer une conversion de la fréquence d'échantillonnage verticale selon le facteur 1/2 et à supprimer, à droite et à gauche, chaque fois 4 points voisins du bord.

8. Procédé selon une des revendications 1 à 7, caractérisé en ce que la quantification du signal de chrominance est effectuée à l'aide d'une table de quantification symétrique.
